# EUROPEAN PATENT APPLICATION

(11) **EP 4 321 246 A1**
(43) Date of publication of application: **14.02.2024**
(21) Application number: 22891858.7
(22) Date of filing: 02.11.2022
(51) Int. Cl.: B01J 20/02, B01J 20/30, C01G 23/00, H01M 4/485

(54) **METHOD FOR PREPARING TITANIUM-BASED LITHIUM ION EXCHANGER**

(30) Priority: 15.11.2021 CN 202111348797
(71) Applicant: Chengdu Chemphys Chemical Industry Co., Ltd, Hi-Tech District Chengdu Sichuan 610041 (CN); Sinolithium Materials Limited, Tsim Sha Tsui KL, Hong Kong 621000 (HK)
(72) Inventor: MENG, Qiang, Chengdu, Sichuan 610041 (CN); DAI, Yihua, Chengdu, Sichuan 610041 (CN); ZHANG, Lei, Chengdu, Sichuan 610041 (CN); YANG, Jinfeng, Chengdu, Sichuan 610041 (CN); BAN, Wenjun, Chengdu, Sichuan 610041 (CN); CAI, Rongfu, Chengdu, Sichuan 610041 (CN)
(74) Representative: Ipside
(86) International application number: PCT/CN2022/129139
(87) International publication number: WO 2023/083062

(57) **Abstract**

The present invention relates to a preparation method for a titanium-based lithium ion exchanger. The method includes the following steps: step 1, preparation of lithium metatitanate precursor, namely, uniformly mixing titanium source, lithium source and water in proportion by ball milling, adding an adjuvant, and allowing reaction by ultrasonic heating and stirring, so as to obtain the lithium metatitanate precursor powder; step 2, preparation of lithium metatitanate powder, including spray drying and microwave calcination with the lithium metatitanate precursor to obtain the lithium metatitanate powder; and step 3, elution and replacement, namely, leaching out Li with an eluent to obtain lithium ion exchanger. The preparation method is a solid-liquid phase contact reaction, the ratio of raw materials is easy to be accurately controlled. The synthesis reaction is strengthened by ultrasound, so as to accelerate the reaction, and the energy consumption is effectively reduced by microwave calcination. Titanium is controlled at a relatively excessive proportion, so as to prepare the lithium metatitanate powder with high porosity and good filterability. The prepared lithium ion exchanger has good lithium extraction performance and low solution loss of titanium, which satisfy the requirements for practical use.

## Description

### Technical Field

The present invention relates to the technical field of new chemical materials preparation, in particular to a preparation method for a titanium-based lithium ion exchanger.

### Background of the Invention

With the development of science and technology, there are more in-depth researches on lithium salt, which is important in chemical and pharmaceutical industries. In addition, Lithium has attracted much attention in the 21st century as a new energy source and strategic resource. Its role becomes even more prominent with the development of lithium battery technology and its application in the field of controlled nuclear fusion. At present, international demand continues to grow at rates of 7% to 11% per year. Therefore, lithium is known as "the 21st-century energy metal" and "the 21st-century clean energy". Lithium is promising in the field of new energy. To resolve the conflict between increasing market demand and critical shortage of lithium ore reserves, people try to develop lithium salts from scarce liquid resources. As the lithium ion sieve adsorbents have good adsorptive selectivity and can economically extract and separate lithium ions from brine and seawater, they are concerned by the industry-related personnel.

Traditional synthesis methods of lithium ion sieve exchange precursors include sol-gel method, hydrothermal method and high-temperature solid-state method. The first two methods are difficult to be applied for industrialization due to the problems of high raw material cost as well as complicated and uncontrollable process. In contrast, the high-temperature solid-state synthesis method is simple in process and easy to achieve mass production, but the raw material powder needs to be milled many times for mixing. It is not easy to control the ratio of lithium to titanium during the process and considered to reach relatively high titanium loss in the synthesized lithium ion sieve. The process also has the problems of long calcination time, high temperature and the like, and the particle size of synthesized powder is difficult to be controlled. Therefore, further study is necessary to improve the technology.

### Summary of the Invention

In order to solve the problems in the prior art, the main object of the present invention is to provide a lithium metatitanate ion exchanger and a preparation method thereof. The method is a solid-liquid contact reaction, where the ratio of raw materials is easy to be accurately controlled and the reaction process is moderate. The synthesis reaction is strengthened by ultrasound for much shorter reaction period. Microwave calcination effectively reduces the temperature drop in calcination and greatly saves the energy. Titanium is controlled at a relatively excessive proportion, so as to prepare lithium metatitanate powder with uniform size distribution, high porosity and good filterability. The prepared lithium ion exchanger has relatively high adsorption activity and low titanium loss. The prepared lithium ion sieve (H₂TiO₃) powder recognizes and adsorbs Li ions from salt lake brine, lithium precipitation mother liquor, high impurity lithium-containing solution, lithium battery recovery liquid and other lithium-containing solutions with high selectivity, and has the features of high adsorption capacity, high adsorption rate, low titanium loss and good cycle stability.

In order to achieve the above objectives, the technical solution adopted in the present invention is as follows:
A preparation method for a titanium-based lithium ion exchanger, including the following steps:
step 1, preparation of lithium metatitanate precursor: uniformly mixing titanium source, lithium source, water and a metal dopant by ball milling, adding an adjuvant, allowing reaction by ultrasonic heating and stirring, and filtering and washing to obtain the lithium metatitanate precursor, wherein the metal dopant is metal X-doped salt;
step 2, preparation of lithium metatitanate powder:
   A) ball milling: mixing the lithium metatitanate precursor at a solid-liquid ratio of 1:2-1:5 to obtain slurry, adding a pore forming agent to the slurry, and uniformly mixing by ball milling;
   B) spray drying: granulating the uniformly mixed slurry by means of spraying, and drying to obtain powder; carrying out the spray granulation at temperature of 150-200°C;
   C) calcination: calcining the powder obtain in step B) at 350-750°C for 6-12 hours, and then rapidly cooling to room temperature to obtain the lithium metatitanate powder; and
step 3, preparation of the titanium-based lithium ion exchanger:
   mixing and stirring the calcined powder in step 2 with an eluent, and leaching out lithium ions to obtain the titanium-based lithium ion exchanger.

As a preferred implementation of the present application, the titanium source in step 1 is metatitanic acid or titanium dioxide, with primary particle size of 10-50nm, preferably 10nm; and a specific surface area is 60-400m²/g, preferably 300m²/g.

As a preferred implementation of the present application, the metatitanic acid or titanium dioxide is mixed with water and milled to obtain uniform slurry in step 1, and the amount of water added is 20%-50% of the solid (mass) content; the lithium source is solid lithium hydroxide, and its addition amount is 2-2.5:1-1.5 according to the molar ratio of lithium to titanium, more preferably, the lithium-titanium molar ratio of 2.01-2.50: 1.

As a preferred implementation of the present application, the metal dopant in step 1 is metal X-doped salt, and the doped element X is any one or more selected from a group consisting of Mn, V, Fe, Nb, Ce, Mo, Mg and Al, and the addition amount of the metal dopant is 0.8-1.0:0-0.2 according to the molar ratio of titanium to the metal X-doped, and the metal X-doped salt is soluble salt or insoluble salt containing any one or more of a group consisting of Mn, V, Fe, Nb, Ce, Mo, Mg and Al.

As a preferred implementation of the present application, the adjuvant, more preferably, is hydrogen peroxide solution, its addition amount is 0.5-1.5 times of the molar mass of titanium, and the concentration of hydrogen peroxide ranges from 10wt% to 40wt%.

As a preferred implementation of the present application, the ultrasonic synthesis reaction in step 1 is performed under following conditions: ultrasonic frequency is preferably 30KHZ-60KHZ, reaction temperature is preferably 40-110°C, and reaction time is preferably 2-8h;

As a preferred implementation of the present application, particle size D50 of the precursor powder granulated by means of spraying in step 1 is 20-60um, and the solid content in the sprayed slurry is controlled as 25-60wt%.

As a preferred implementation of the present application, the calcination in step 2 is more preferably conducted at temperature of 400-600°C in air atmosphere for 3-6h, and microwave calcination is a more preferred option.

As a preferred implementation of the present application, the pore forming agent in sprayed slurry in step 1 is any one or more selected from a group consisting of carbon powder, carbon fiber powder, carbon nanotubes, nano-cellulose, sucrose, glucose, polyvinyl alcohol, polysulfone, polyarylsulfone, polyethylene powder and paraffin powder, the addition amount of the pore forming agent to the sprayed slurry is 3wt%-10wt% of the slurry mass, and the solid content in the sprayed slurry is 30-60%.

As a preferred implementation of the present application, the eluent in step 3 is any one or more selected from a group consisting of sulfuric acid, nitric acid, hydrochloric acid, acetic acid, citric acid, Na₂S₂O₆ and (NH₄)₂SO₄.

Compared with the prior art, the present invention has the following beneficial effects:
(1) The method is a solid-liquid contact reaction, where the ratio of raw materials is easy to be accurately controlled and the reaction process is moderate. The synthesis reaction is strengthened by ultrasound for much shorter reaction period. Microwave calcination effectively reduces the temperature drop in calcination and greatly saves the energy. Titanium is controlled at a relatively excessive proportion, so as to prepare lithium metatitanate powder with uniform size distribution, high porosity and good filterability.
(2) The prepared lithium ion exchanger shows high adsorption activity when it is used to extract lithium from salt lake brine or simulated brine, and is applicable to simulated brine with 0.1 g/L-2g/L lithium. The lithium ion exchanger has lithium adsorption capacity of 30mg/g-50mg/g.
(3) The prepared lithium ion exchanger has high adsorptive selectivity, high adsorption and desorption rates, good cycle stability and titanium loss less than 0.01%.
(4) With the presence of appropriately excessive titanium in the preparation process, the adsorption capacity, as well as the adsorption performance and the filterability of the lithium ion sieve are considerably improved.

### Brief description of the Drawings

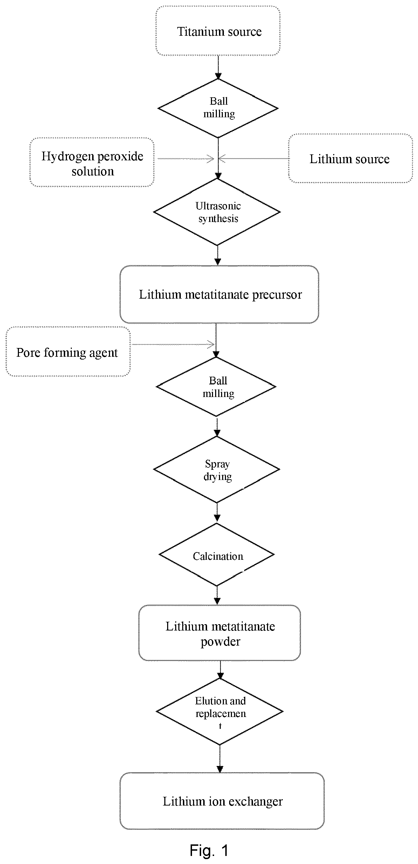

Fig. 1 is a schematic diagram of the preparation process flow of the titanium-based lithium ion exchanger in the present invention.

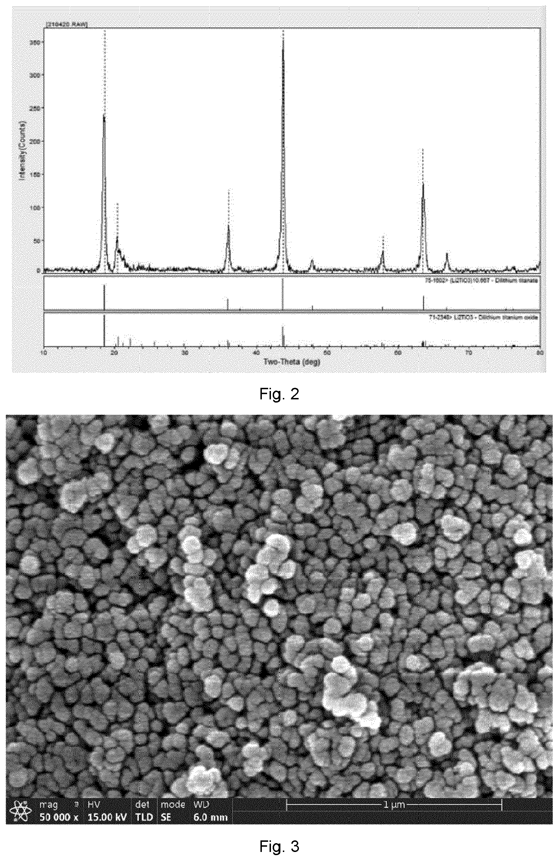

Fig. 2 is an XRD spectrum of the titanium-based lithium ion exchanger prepared in Embodiment 3.
Fig. 3 is an SEM micrograph of the titanium-based lithium ion exchanger prepared in Embodiment 3.
Fig. 4 is a diagram of a static adsorption kinetic curve of the titanium-based lithium ion exchanger prepared in Embodiment 1.

### Detailed Description of Embodiments

A preparation method for a titanium-based lithium ion exchanger, including the following steps:
step **1,** preparation of lithium metatitanate precursor: uniformly mixing titanium source, lithium source, water and a metal dopant by ball milling, adding an adjuvant, allowing reaction by ultrasonic heating and stirring, and filtering and washing to obtain the lithium metatitanate precursor, wherein the metal dopant is metal X-doped salt;
step 2, preparation of lithium metatitanate powder:
   A) ball milling: mixing the lithium metatitanate precursor at a solid-liquid ratio of 1:2-1:5 to obtain slurry, adding a pore forming agent to the slurry, and uniformly mixing by ball milling;
   B) spray drying: granulating the uniformly mixed slurry by means of spraying, and drying to obtain powder; carrying out the spray granulation at temperature of 150-200°C;
   C) calcination: calcining the powder obtain in step B) at 350-750°C for 6-12 hours, and then rapidly cooling to room temperature to obtain the lithium metatitanate powder; and
step 3, preparation of the titanium-based lithium ion exchanger:
   mixing and stirring the calcined powder in step 2 with an eluent, and leaching out lithium ions to obtain the titanium-based lithium ion exchanger.

Preferably, the titanium source in step **1** is metatitanic acid or titanium dioxide, with primary particle size of 10-50nm, preferably 10nm; and a specific surface area is 60-400m²/g, preferably 300m²/g.

Preferably, the metatitanic acid or titanium dioxide is mixed with water and milled to obtain uniform slurry in step **1,** and the amount of water added is 20%-50% of the solid (mass) content; and the lithium source is solid lithium hydroxide, and its addition amount is 2.01-2.5:1 according to the molar ratio of lithium to titanium.

Preferably, the metal dopant in step **1** is metal X-doped salt, and the doped element X is any one or more selected from a group consisting of Mn, V, Fe, Nb, Ce, Mo, Mg and Al, and the addition amount of the metal dopant is 0.8-1.0:0-0.2 according to the molar ratio of titanium to the metal X-doped, and the metal X-doped salt is soluble salt or insoluble salt containing any one or more of a group consisting of Mn, V, Fe, Nb, Ce, Mo, Mg and Al.

Preferably, the adjuvant, more preferably, is hydrogen peroxide solution, its addition amount is 0.5-1.5 times of the molar mass of titanium, and the concentration of hydrogen peroxide ranges from 10wt% to 40wt%.

Preferably, particle size D50 of the precursor powder granulated by means of spraying in step 1 is 20-60um, and the solid content in the sprayed slurry is controlled as 25-60wt%, more preferably, 45-55wt%.

Preferably, the ultrasonic heating and stirring reaction in step 1 is performed under following conditions that ultrasonic frequency is preferably 30KHZ-60KHZ, reaction temperature is preferably 40-110°C, and reaction time is preferably 2-8h.

Preferably, the calcination in step 2 is conducted at temperature of 400-600°C in air atmosphere for 3-6h, and microwave calcination is a more preferred option.

Preferably, the pore forming agent in sprayed slurry in step 1 is any one or more selected from a group consisting of carbon powder, carbon fiber powder, carbon nanotubes, nano-cellulose, sucrose, glucose, polyvinyl alcohol, polysulfone, polyarylsulfone, polyethylene powder and paraffin powder, the addition amount of the pore forming agent to the sprayed slurry is 3wt%-10wt% of the slurry mass.

Preferably, the eluent in step **3** is any one or more selected from a group consisting of sulfuric acid, nitric acid, hydrochloric acid, acetic acid, citric acid, Na₂S₂O₆ and (NH₄)₂SO₄.

The main solution of the present invention and further alternatives thereof may be combined freely to form a plurality of solutions, all of which may be adopted and claimed in the present invention; and each alternative can be arbitrarily combined with other compatible alternatives according to the present invention. Multiple combinations are clear to those skilled in the art based on the prior art and the common general knowledge after understanding the solutions of the present invention, all of which are technical solutions to be protected by the present invention and are not exhaustive here.

The implementation of the present invention is described below through specific examples, and those skilled in the art can easily understand other advantages and effects of the present invention from the contents disclosed in the Description. The present invention can also be implemented or applied in other different specific implementations, and various details in the Description can also be modified or changed based on different views and applications without departing from the spirit of the present invention. It should be noted that, the following embodiments and the features in the embodiments may be combined with each other in a non-conflicting situation.

It should be noted that, the technical solutions of the embodiments of the present invention will be described clearly and completely as follows in combination with the figures of these embodiments for clear understanding of the objects, technical solutions and advantages of the present invention. Apparently, the embodiments described herein are only some, but not all of the embodiments of the present invention. Generally, the components in the embodiments of the present invention described and shown in the figures herein may be arranged and designed in various configurations. According to the present invention, the specific operations in the stirring, including mechanical stirring and high-speed dispersion, are not specified, and the brine in the present invention is also not specified, any operations and brine well known to those skilled in the art are available.

For data analysis in the following examples, K, Ca, Na, Mg and B are analyzed by ICP spectrometry, Cl is analyzed by spectrophotometry colorimetry, Li and Ti are determined by atomic absorption spectrometry, and sulfate radical is determined by barium sulfate turbidimetry (GB 13580.6-92). Unless particularly stated elsewhere, % recited in this application shows the mass percentage, namely wt%.

The chemical composition of the simulated brine used in the following embodiments is as follows:

| PH | Density | Temperature | Li⁺ | Na⁺ | K⁺ | Mg²⁺ | Ca²⁺ | Cl | SO₄²⁻ | B³⁻ |
|---|---|---|---|---|---|---|---|---|---|---|
| | g/cm³ | °C | mg/L | | | | | | | |
| 7.26 | 1.2676 | 25 | 1572 | 7695 | 803 | 74006 | 16 | 246498 | 11106 | 1713 |

### Embodiment 1:

Step 1: 40kg of metatitanic acid is mixed with 10kg of water to obtain uniform slurry by ball milling, added with 10.5kg of solid lithium hydroxide and 2.5g of manganese sulfate, heated to 80°C under the condition of ultrasonic frequency of 40KHz, and stirred at normal pressure for reaction. During the reaction process, hydrogen peroxide solution (0.5% of molar mass of titanium) is added dropwise, and lithium metatitanate precursor is obtained by filtering and washing after 2.5 hours.

Step 2, preparation of lithium metatitanate powder:
A) ball milling: a small amount of water is added to the resulting lithium metatitanate precursor in step 1 at a solid-liquid ratio of 1:3.5, mixed to obtain slurry, 3% starch is added, and uniformly mixed by ball milling;
B) spray drying: the resulting slurry in step A is pre-granulated by means of spraying at temperature of 180°C, and dried to obtain powder;
C) calcination: the powder obtained in step B is subjected to microwave calcination at 410°C for 4h to obtain precursor Li₂TiO₃ with measured porosity up to 82%.
   step 3, preparation of the titanium-based lithium ion exchanger:
   The powder obtained by calcination in step 2 is mixed with eluent and stirred, and lithium ions are leached out to obtain manganese-doped lithium ion exchanger (**H₂TiO₃**).

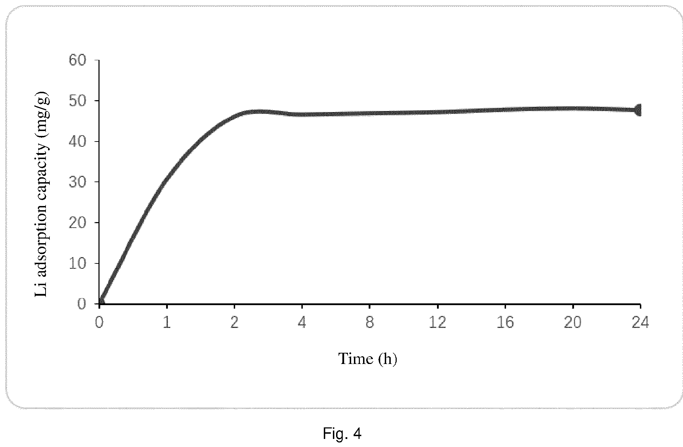

The prepared titanium-based lithium ion exchanger (**H₂TiO₃**) is subjected to adsorption test with simulated brine. It is determined that the lithium ion exchanger (**H₂TiO₃**) has lithium adsorption capacity of **30.5mg/g** within 1h and saturated lithium adsorption capacity of **46.0mg/g** for 24 consecutive hours. Lithium extraction recovery efficiency is 99.1%, elution rate is 99.7%, and titanium loss is less than 0.050%. Referring to Fig. 4, there is shown a static adsorption kinetic curve, according to which the adsorption equilibrium is nearly achieved after 2h.

### Embodiment 2:

The preparation method is similar to that of Embodiment 1, but the difference is that the metal-doped salt manganese sulfate in step 1 of Embodiment 1 is replaced with aluminum sulfate to prepare the doped lithium ion exchanger.

### Embodiment 3:

The preparation method is similar to that of Embodiment 2, but the difference is that the metal-doped salt manganese sulfate in step 1 of Embodiment 2 is replaced with vanadium oxyoxalate to prepare the doped lithium ion exchanger;

### Comparative example 1:

The preparation method is similar to that of Embodiment 1, but the difference is that the metal-doped salt manganese sulfate in step 1 of Embodiment 1 is replaced with magnesium sulfate to prepare the doped lithium ion exchanger;

### Comparative example 2:

The preparation method is similar to that of Embodiment 1, but the difference is that the metal-doped salt manganese sulfate in step 1 of Embodiment 1 is replaced with cobalt sulfate to prepare the doped lithium ion exchanger;

### Comparative example 3:

The preparation method is similar to that of Embodiment 1, but the difference is that the metal-doped salt manganese sulfate in step 1 of Embodiment 1 is replaced with nickel sulfate to prepare the doped lithium ion exchanger;

The exchanger prepared above and the titanium-based lithium ion exchanger (**H₂TiO₃**) prepared in the present embodiment are subjected to an adsorption test;

The specific test results are as follows:

| Item | 1h lithium adsorption capacity | Li recovery rate | Synthesis time/h | BET/m².g¹ | Precursor porosity |
|---|---|---|---|---|---|
| Embodiment 1 | 30.5mg/g | 98.3% | 2.5 | 22.1 | 72% |
| Embodiment 2 | 28.5mg/g | 96.6% | 2.5 | 19.5 | 68% |
| Embodiment 3 | 27.6mg/g | 94.6% | 2.5 | 16.5 | 66% |
| Comparative example 1 | 17.9mg/g | 90.6% | 2.5 | 13.5 | 53% |
| Comparative example 2 | 19.5mg/g | 92.1% | 2.5 | 14.7 | 58% |
| Comparative example 3 | 18.3mg/g | 91.3% | 2.5 | 13.9. | 51% |

### Embodiment 4:

The preparation method is similar to that of Embodiment 1, but the difference is that the ultrasound is eliminated from the precursor synthesis reaction process in Embodiment 1, and the reaction time needs to be 12 hours to prepare the doped lithium ion exchanger; then, the titanium-based lithium ion exchanger (**H₂TiO₃**) prepared in the present embodiment is subjected to an adsorption test, and the specific test results are as follows:

| 1h lithium adsorption capacity | Saturated lithium adsorption capacity | Li recovery rate | Adsorbent solution loss | Precursor porosity |
|---|---|---|---|---|
| 27.1mg/g | 43mg/g | 95.6% | <0.05% | 68% |

### Embodiment 5:

For a titanium-based lithium ion exchanger (**H₂TiO₃**), the preparation method is similar to that of Embodiment 1, but the difference is that microwave calcination is replaced with high-temperature furnace calcination, and the calcination temperature is 600°C. then, the titanium-based lithium ion exchanger (**H₂TiO₃**) prepared in the present embodiment is subjected to an adsorption test, and the specific test results are as follows:

| 1h lithium adsorption capacity | Saturated lithium adsorption capacity | Li recovery rate | Adsorbent solution loss | Precursor porosity |
|---|---|---|---|---|
| 20.1mg/g | 40mg/g | 98.6% | <0.05% | 73% |

### Comparative example 4:

The preparation method is the same as that of Embodiment 2, but the difference is that the calcination temperature is 500°C.

### Comparative example 5

The preparation method is the same as that of Embodiment 2, but the difference is that the calcination temperature is 700°C.

The lithium ion exchanger (**H₂TiO₃**) prepared in Embodiment 2, Comparative example 2 and Comparative example is subjected to an adsorption test, and the specific test results are as follows:

| | Saturated lithium adsorption capacity | Li recovery rate | Adsorbent solution loss | Precursor porosity |
|---|---|---|---|---|
| Embodiment 5 | 40mg/g | 98.6% | <0.05% | 73% |
| Comparative example 4 | 26mg/g | 91.3% | 0.17% | 67% |
| Comparative example 5 | 33mg/g | 93.7% | 0.11% | 71% |

### Embodiment 6:

For a titanium-based lithium ion exchanger (**H₂TiO₃**), the preparation method is similar to that of Embodiment 1, but the difference is that the addition amount of solid lithium hydroxide in step 1 is added according to the lithium-titanium molar ratio of 2:1.03 (excessive titanium), and then the prepared titanium-based lithium ion exchanger (**H₂TiO₃**) is subjected to adsorption test on simulated brine. The specific test results are as follows:

| 1h lithium adsorption capacity | Saturated lithium adsorption capacity | Li recovery rate | Adsorbent solution loss | BET/m².g⁻¹ | Precursor porosity |
|---|---|---|---|---|---|
| 35.1mg/g | 50.1mg/g | 99.1% | <0.01% | 19.3 | 75% |

For a titanium-based lithium ion exchanger (**H₂TiO₃**) in **Embodiments 7-9,** the preparation method is similar to that of Embodiment 6, but the difference is that the titanium-based lithium ion exchanger (**H₂TiO₃**) prepared under different Li/Ti (molar ratio) conditions is subjected to adsorption test on simulated brine. The specific test results are as follows:

| | Li/Ti (molar ratio) | Saturated lithium adsorption capacity | Li recovery rate | Adsorbent Ti loss |
|---|---|---|---|---|
| Embodiment 1 | 2:1.0 | 30.5mg/g | 98.3% | <0.01% |
| Embodiment 6 | 2:1.03 | 36.1mg/g | 99.1% | <0.01% |
| Embodiment 7 | 2:0.91 | 25.3mg/g | 91.3% | 0.03% |
| Embodiment 8 | 2:1.11 | 34.7mg/g | 95.7% | 0.05% |
| Embodiment 9 | 2:1.50 | 31.2mg/g | 94.7% | 0.11% |

### Embodiment 10:

For a titanium-based lithium ion exchanger (**H₂TiO₃**), the preparation method is similar to that of Embodiment 3, but the difference is that the pore forming agent is replaced with chitosan, and then the prepared titanium-based lithium ion exchanger (**H₂TiO₃**) is subjected to adsorption test on simulated brine. The specific test results are as follows:

| 1h lithium adsorption capacity | Saturated lithium adsorption capacity | Li recovery rate | Adsorbent solution loss | BET/m².g⁻¹ | Precursor porosity |
|---|---|---|---|---|---|
| 36.3mg/g | 51.5mg/g | 98.3% | <0.01% | 20.3 | 75% |

### Embodiment 11:

For a titanium-based lithium ion exchanger (**H₂TiO₃**), the preparation method is similar to that of Embodiment 3, but the difference is that the pore forming agent is replaced with polysulfone powder, and then the prepared titanium-based lithium ion exchanger (**H₂TiO₃**) is subjected to adsorption test on simulated brine. The specific test results are as follows:

| 1h lithium adsorption capacity | Saturated lithium adsorption capacity | Li recovery rate | Adsorbent Ti loss | BET/m².g⁻¹ | Precursor porosity |
|---|---|---|---|---|---|
| 37.1mg/g | 51.9mg/g | 98.3% | <0.01% | 25.3 | 82% |

| | | | | | |
|---|---|---|---|---|---|
| Note: For determination of the powder porosity, take 50g ion exchange powder dried to constant weight, place it in a 100mL measuring cylinder and vibrate it; read the volume V1; take another 50g ion exchange powder dried to constant weight and add it into a 200mL measuring cylinder; add water and shake the measuring cylinder to obtain a uniformly mixed slurry; add m water, and then perform ultrasonic treatment for 15min and let it stand for 1h to ensure that the total volume V is read after the adsorbent is saturated with water. Then the porosity Φ=(m-V)/V₁×100% Note: The proportions % of titanium loss, elution rate and recovery rate are calculated (mass ratio) according to industry standard formula. | | | | | |

### Cycle stability experiment

Simulated brine 1 is used to adsorb the lithium ion exchanger (**H₂TiO₃**) prepared in Embodiment 8 for 1.5h, and then filtered after washing. The solution is analyzed with 0.22mol/L sulfuric acid for 1.5h, and then filtered after washing. The cycle stability experiment is repeated for 100 times, and the lithium ion concentration is measured by ICP. The evaluation results are as follows:

| Number of cycles | Li adsorption capacity | Li recovery rate | Adsorbent Ti loss |
|---|---|---|---|
| 1 | 37.5mg/g | 98.3% | <0.01% |
| 2 | 36.1mg/g | 99.1% | <0.01% |
| .... | .... | .... | .... |
| 15 | 35.1mg/g | 95.7% | <0.01% |
| 16 | 37.2mg/g | 94.7% | <0.01% |
| .... | .... | .... | .... |
| 36 | 33.2mg/g | 95.7% | <0.01% |
| 38 | 31.7mg/g | 93.3% | <0.01% |
| .... | .... | .... | .... |
| 60 | 28.6mg/g | 91.3% | <0.01% |
| .... | .... | .... | .... |
| 80 | 28.1mg/g | 91.1% | <0.01% |
| .... | .... | .... | .... |
| 90 | 27.5mg/g | 92.1% | <0.01% |
| .... | .... | .... | .... |
| 100 | 27.3mg/g | 90.1% | <0.01% |

The lithium ion exchanger circulates for 100 times, and the powder adsorbent has good stability; the average Li adsorption capacity is stable at>27mg/g, and the recovery rate is>90%; the Li elution rate is>95%. Adsorption experiments of different brine or lithium containing solutions:

### Adsorption test of brine 1

| PH | Density | Temperature | Li⁺ | Na⁺ | K⁺ | Mg²⁺ | Ca²⁺ | Cl | SO₄²⁻ | B³⁻ |
|---|---|---|---|---|---|---|---|---|---|---|
| | g/cm³ | °C | mg/L | | | | | | | |
| 7.66 | 1.36 | 20-25 | 1174 | 5695 | 701 | 112500 | 33 | 3313530 | 28300 | 968 |

Li adsorption capacity is 25.8mg/g for the first time, and Li recovery rate is 97.7%. After 50 cycles, Li adsorption capacity is 21.5mg/g, and Li recovery rate is 95.8%.

### Adsorption test of brine 2

| PH | Density | Temperature | Li⁺ | Na⁺ | K⁺ | Ca²⁺ | Mg²⁺ | Cl- | SO42- | B³⁻ |
|---|---|---|---|---|---|---|---|---|---|---|
| | g/cm³ | °C | mg/L | | | | | | | |
| 9.5 | 1.181 | 20-25 | 680 | 99000 | 9800 | 997 | 990 | 169000 | 6600 | 460 |

Li adsorption capacity is 19.8mg/g for the first time, and Li recovery rate is 98.5%. After 50 cycles, Li adsorption capacity is 18.5mg/g, and Li recovery rate is 95.5%.

### Adsorption test of lithium precipitation mother liquor

| PH | Density | Temperature | Li⁺ | Na⁺ | K⁺ | Ca²⁺ | Mg²⁺ | Cl- | SO42- | B³⁻ |
|---|---|---|---|---|---|---|---|---|---|---|
| | g/cm³ | °C | mg/L | | | | | | | |
| 11.5 | 1.231 | 20-25 | 1379 | 80000 | 8800 | 56 | 10 | 102870 | 3600 | 73 |

Li adsorption capacity is 30.8mg/g for the first time, and Li recovery rate is 96.5%. After 50 cycles, Li adsorption capacity is 25.5mg/g, and Li recovery rate is 93.5%.

It can be seen from the above table that the titanium-based lithium ion exchanger prepared by the invention has good adsorption performance and cycle stability.

The above description of preferred embodiments should not be interpreted in a limiting manner since those of ordinary skill in the art can make improvements or changes according to the aforesaid description, and all these improvements and changes should fall into the protection scope of the claims of the present invention.

## Claims

1. A preparation method for a titanium-based lithium ion exchanger, **characterized by** comprising following steps:
step **1,** preparation of lithium metatitanate precursor: uniformly mixing titanium source, lithium source, water and a metal dopant by ball milling, adding an adjuvant, allowing reaction by ultrasonic heating and stirring, and filtering and washing to obtain the lithium metatitanate precursor;
step 2, preparation of lithium metatitanate powder:
A) ball milling: adding water to the lithium metatitanate precursor at a solid-liquid ratio of 1:2-1:5, mixing to obtain slurry, adding a pore forming agent to the slurry, and uniformly mixing by ball milling;
B) spray drying: granulating the uniformly mixed slurry by means of spraying, and drying to obtain powder; carrying out the spray granulation at temperature of 150-200°C;
C) calcination: calcining the powder obtain in step B) at 350-750°C for 6-12 hours, and then rapidly cooling to room temperature to obtain the lithium metatitanate powder; and
step 3, preparation of the titanium-based lithium ion exchanger:
mixing and stirring the calcined powder in step 2 with an eluent, and leaching out lithium ions to obtain the titanium-based lithium ion exchanger.

2. The preparation method according to claim 1, **characterized in that**, the titanium source in step 1 is metatitanic acid or titanium dioxide, the primary particle size of the metatitanic acid or the titanium dioxide is 10-50nm, and a specific surface area is 60-400m²/g thereof; the lithium source is lithium hydroxide; and the metal dopant in step **1** is metal X-doped salt, and the doped element X is any one or more selected from a group consisting of Mn, V, Fe, Nb, Ce, Mo, Mg and Al, and the addition amount of the metal dopant is 0.8-1.0:0-0.2 according to the molar ratio of titanium to the metal X-doped, and the metal X-doped salt is soluble salt or insoluble salt containing any one or more of a group consisting of Mn, V, Fe, Nb, Ce, Mo, Mg and Al.

3. The preparation method according to claim 1 or 2, **characterized in that**, the titanium source is mixed with water, and the addition amount of the water is 20%-50% of the solid mass; the addition amount of lithium hydroxide is 2-2.5:1-1.5 according to the molar ratio of lithium to titanium; and the molar ratio of titanium to the metal dopant is 0.8-1.0:0-0.2.

4. The preparation method according to claim 1, **characterized in that**, the adjuvant is any one selected from a group consisting of hydrogen peroxide solution, ammonium hydroxide, citric acid and oxalic acid, and the addition amount is 0-1.5 times of the molar mass of titanium.

5. The preparation method according to claim 1, **characterized in that**, the ultrasonic heating and stirring reaction in step 1 is conducted with the following parameters: ultrasonic frequency is 20KHZ-60KHZ, reaction temperature is 20-120°C, and reaction time is 4-24h.

6. The preparation method according to claim 1, **characterized in that**, the calcination method in step 1 is calcination in high-temperature furnace or microwave calcination.

7. The preparation method according to claim 1, **characterized in that**, particle size **D50** of the precursor powder granulated by means of spraying in step 1 is 20-60um, and the solid content in the sprayed slurry is controlled as 25-60%.

8. The preparation method according to claim 1, **characterized in that**, the pore forming agent is any one or more selected from a group consisting of starch, carbon powder, carbon fiber powder, carbon nanotubes, nano-cellulose, sucrose, chitosan, glucose, polyvinyl alcohol, polysulfone, polyarylsulfone, polyethylene powder and paraffin powder, and the addition amount of the pore forming agent is 3%-10% of the slurry mass.

9. The preparation method according to claim 1, **characterized in that**, the eluent is any one selected from a group consisting of sulfuric acid, nitric acid, hydrochloric acid, acetic acid, citric acid, Na₂S₂O₆ and (NH₄)₂SO₄.

10. A lithium metatitanate ion exchanger, **characterized in that**, the exchanger is prepared by the method according to any of claims 1 to 9.
